# EUROPÄISCHE PATENTSCHRIFT

(11) **EP 4 320 509 B1**
(45) Veröffentlichungstag und Bekanntmachung des Hinweises auf die Patenterteilung: **13.05.2026**
(21) Anmeldenummer: 22717356.4
(22) Anmeldetag: 21.03.2022
(51) Int. Cl.: G06F 3/14

(54) **SYSTEM UND FAHRZEUG ZUR REDUNDANTEN ANZEIGE EINES DATENSIGNALS**
SYSTEM AND VEHICLE FOR REDUNDANT DISPLAY OF A DATA SIGNAL
SYSTÈME ET VÉHICULE D'AFFICHAGE REDONDANT D'UN SIGNAL DE DONNÉES

(30) Priorität: 08.04.2021 DE 102021203481
(43) Veröffentlichungstag der Anmeldung: 14.02.2024
(73) Patentinhaber: AUMOVIO Germany GmbH, 60488 Frankfurt am Main (DE)
(72) Erfinder: KABATEK, Ulrich, 60488 Frankfurt am Main (DE); STAMM, Martin, 60488 Frankfurt am Main (DE)
(74) Vertreter: Aumovio Corporation
(86) Internationale Anmeldenummer: PCT/DE2022/200050
(87) Internationale Veröffentlichungsnummer: WO 2022/214149

(56) Entgegenhaltungen:
- WO-A1-2020/116694
- US-A1- 2013 033 503
- US-A1- 2019 068 700
- US-A1- 2022 019 396

## Beschreibung

Die Erfindung betrifft ein System zur redundanten Anzeige eines Datensignals. Ferner betrifft die Erfindung ein Fahrzeug.

Bei Kraftfahrzeugen gibt es einen klaren Trend dazu, anstelle vieler kleiner spezieller Elektronikeinheiten einige wenige generische Zentraleinheiten einzusetzen. In diesen Zentraleinheiten können generische bekannte Recheneinheiten (ASICs) eingesetzt werden.

Diese Zentraleinheiten verfügen typischerweise über viele Anschlussmöglichkeiten für diverse Ein- und Ausgänge, insbesondere auch für Grafikanzeigen und Kameras. Üblicherweise wurden diese Zentraleinheiten nicht speziell für die Anwendung in Kraftfahrzeugen mit sicherheitsrelevanten Anwendungen verwendet und entwickelt, sondern für die Konsumerindustrie, hier insbesondere für Unterhaltungselektronik wie Smartphone und Tablets.

Bei der Anwendung solcher Zentraleinheiten im Kraftfahrzeug für sicherheitsrelevante Anwendungen werden deshalb zusätzlich spezialisierte hochsichere aber weniger leistungsfähige Microcontroller eingesetzt, um kritische Berechnungen durchzuführen und die Sicherheit zu garantieren. Allerdings ist dieser Ansatz für sicherheitsrelevante Anzeigen nicht einfach umzusetzen, da diese Anzeigen heutzutage auch über hohe Auflösungen verfügen müssen. Deshalb wird hierfür eine hohe Grafikrechenleistung und eine hohe Datenrate benötigt, die ein kleiner spezialisierter Microcontroller üblicherweise nicht erreichen kann. Hochauflösende Grafikkarten tragen zudem zu erheblichen Mehrkosten bei.

Die WO 2020/116694 A1 betrifft eine Vorrichtung für ein Fahrzeug mit einer Struktur aus mehreren System-on-Chips (SoCs) und ein Verfahren zur Steuerung der Vorrichtung.

Die US 2013/033503 A1 betrifft ein sicheres Anzeigesystem, insbesondere ein Vollbild-Anzeigesystem für einen Bildschirm der "Liquid Crystal Display"-Technologie, das zwei unabhängig voneinander ansteuerbare Anzeige-Halbbildschirme umfasst.

Die US 2019/068700 A1 bezieht sich auf Techniken zum Rendern von Bildern und insbesondere auf Techniken zur Implementierung ausfallsicherer Clustersysteme.

Die DE 1020 18119026 A1 offenbart ein Kameraüberwachungssystem für zumindest einen Seitenbereich auf einer Beifahrerseite eines Nutzfahrzeugs, aufweisend eine erste Bildverarbeitungseinheit; eine erste Kameraeinheit zur Erfassung von Bilddaten von dem zumindest einen Seitenbereich, wobei die erste Kameraeinheit die Bilddaten zur Verarbeitung der ersten Bildverarbeitungseinheit zur Verfügung stellt; eine zweite Bildverarbeitungseinheit; und eine zweite Kameraeinheit zur Erfassung von weiteren Bilddaten von dem zumindest einen Seitenbereich, wobei die zweite Kameraeinheit die weiteren Bilddaten zur Verarbeitung der zweiten Bildverarbeitungseinheit zur Verfügung stellt, wobei die erste Bildverarbeitungseinheit und die zweite Bildverarbeitungseinheit ausgebildet sind, um unabhängig voneinander Bilddaten zu verarbeiten, um eine redundante Bilderfassung für den zumindest einen Seitenbereich zu ermöglichen.

Die DE 10 2007 045774 B4 offenbart eine Vorrichtung zur Synchronisation einer Bildanzeige, wobei ein erstes Bildsignal, das von einer ersten Einrichtung bereitgestellt wird, und ein zweites Bildsignal, das von einer zweiten Einrichtung bereitgestellt wird, zusammen zur Anzeige gebracht werden, wobei das zweite Bildsignal durch Veränderung der zeitlichen Position einer Austastlücke des zweiten Bildsignals relativ zu einer Austastlücke des ersten Bildsignals mit dem ersten Bildsignal synchronisiert wird.

Es ist daher eine Aufgabe der Erfindung ein System für eine sichere und hochverfügbare Anzeige insbesondere im Fahrzeug anzugeben. Ferner ist es eine Aufgabe ein solches Fahrzeug anzugeben.

Die Aufgabe wird gelöst durch ein System mit den Merkmalen des Anspruchs 1 und ein Fahrzeug mit den Merkmalen des Anspruchs 13.

**In** den Unteransprüchen sind weitere vorteilhafte Maßnahmen aufgelistet, die miteinander kombiniert werden können, um weitere Vorteile zu erzielen.

Die Aufgabe wird gelöst durch ein System zur redundanten Anzeige eines Datensignals, das System aufweisend eine erste Zentraleinheit zum Generieren eines ersten Datensignals, und eine zweite Zentraleinheit zum Generieren eines zweiten Datensignals,
ferner aufweisend eine erste Anzeigeneinheit, wobei die erste Zentraleinheit mit der ersten Anzeigeneinheit zum Anzeigen des ersten Datensignals verbunden ist,
und eine zweite Anzeigeneinheit, wobei die zweite Zentraleinheit mit der zweiten Anzeigeneinheit zum Anzeigen des zweiten Datensignals verbunden ist,
sowie einen ersten Umschalter, wobei die erste Anzeigeneinheit über den ersten Umschalter mit der ersten Zentraleinheit als auch der zweiten Zentraleinheit verbunden ist,
ferner aufweisend eine Kommunikationsverbindung zwischen der ersten Zentraleinheit und der zweiten Zentraleinheit zum Austausch von Daten, und wobei das System dazu konfiguriert ist, bei Ausfall oder Störung der ersten Zentraleinheit mittels Umschalten des ersten Umschalters und der Kommunikationsverbindung ein Anzeigen des ersten Datensignals auf der ersten Anzeigeneinheit durch die zweite Zentraleinheit zu bewerkstelligen.

Erfindungsgemäß wurde erkannt, dass die generischen Zentraleinheiten über unbenutzte Anschlüsse für Anzeigen verfügen. Dies basiert zum einen auf der Tatsache, üblicherweise mehr Anzeigeneinheiten an eine Zentraleinheit zu schließen als mit guter Qualität betrieben werden können, da die Grenze in der Verarbeitungsleistung liegt und nicht in der Leistung der entsprechenden Videoausgänge zum Anschluss der Anzeigeneinheiten. Zum anderen basiert dies auf der Tatsache, die einzelnen Zentraleinheiten nur für Berechnungen mit hoher Last zu verwenden, so dass die Ausgänge für Anzeigeneinheiten sogar teilweise unbenutzt sind.

Erfindungsgemäß ist ein erster Umschalter vorgesehen, welcher sowohl mit der ersten Zentraleinheit als auch mit der zweiten Zentraleinheit und mit der ersten Anzeigeneinheit verbunden ist. Ferner ist eine Kommunikationsverbindung zwischen der ersten Zentraleinheit und der zweiten Zentraleinheit zum Austausch von Daten vorgesehen. Dadurch können jeweils beide Zentraleinheiten das erste als auch das zweite Datensignal erzeugen oder erhalten.

Im regulären Betrieb zeigt die erste Anzeigeneinheit ein erstes Datensignal, welches von der ersten Zentraleinheit generiert wurde und die zweite Anzeigeneinheit ein zweites Datensignal, welches von der zweiten Zentraleinheit generiert wurde. D. h. nur jeweils einer der Zentraleinheiten bzw. dessen Ausgang generiert auch aktive Inhalte, die auf die jeweilige Anzeigeneinheit geschaltet werden.

Findet ein Problem/Fehler/Ausfall der ersten Zentraleinheit statt, so kann mittels des ersten Umschalters und der Kommunikationsverbindung auf die zweite d. h. auf die nicht ausgefallene Zentraleinheit umgeschaltet werden, zur Anzeige des ersten Datensignals auf der ersten Anzeigeneinheit. Dadurch wird eine Redundanz erreicht, ohne dass je der doppelte Rechenaufwand vorliegt. Durch den synchronisierten Betrieb kann eine für den Anwender nicht oder fast nicht wahrnehmbare Umschaltung erzielt werden.

Durch das erfindungsgemäße System ist jederzeit ein sicheres und hochverfügbares Anzeigen eines Datensignals, insbesondere in Fahrzeugen, durch eine schnelle und synchronisierte Umschaltung zwischen mehreren Zentraleinheiten möglich.

Dabei können die Datensignale beispielsweise Signale von Kameras sein und die Anzeigeneinheiten als Displays ausgebildet sein. Aber auch andere Datensignale und mehrere Anzeigeneinheiten sind möglich.

Erfindungsgemäß ist der erste Umschalter dazu ausgebildet, ein vorheriges Datensignal bei einem Ausfall der ersten Zentraleinheit zu speichern, bis eine Umschaltung auf die zweite Zentraleinheit bewerkstelligbar ist. Dadurch ist eine sehr kurzzeitige Überbrückung möglich, bis beispielsweise die zweite Zentraleinheit bereitsteht. Das heißt, es wird ein Zwischenspeichern eines beispielsweise Bildes im ersten Umschalter bewerkstelligt, das ausgegeben wird, bis die zweite Zentraleinheit verfügbar ist und das erste Datensignal durch die zweite Zentraleinheit generiert wird.

Auch kann zur Überbrückung nur ein Teilbild/Teildatensignal zwischengespeichert werden, z. B. ein Viertel. Dadurch können hierbei beispielsweise die ersten Datensignale mit höherer Rate erzeugt werden, so dass das nächste Datensignal bereits vor dem Anzeigen durch die zweite Zentraleinheit erzeugt wird.

Ferner kann zur Überbrückung im Fehlerfall/Ausfall das letzte korrigierte erste Datensignal ausgegeben werden. Dies ist beispielsweise der Fall, wenn es aufgrund eines Neustarts der ausgefallenen ersten Zentraleinheit zu einer Verzögerung kommt und die zweite Zentraleinheit das erste Datensignal zur Anzeige auf der betriebsfähigen Anzeigeneinheit noch nicht generiert hat.

Auch die kurzzeitige Ausgabe eines schwarzen Bildes durch den ersten Umschalter bis die zweite Zentraleinheit mit dem ersten Datensignal verfügbar ist, ist möglich, da dies für den Anwender kaum sichtbar ist. Ferner kann auch die kurzzeitige Ausgabe eines hellen Bildes durch den ersten Umschalter bis die zweite Zentraleinheit mit dem ersten Datensignal verfügbar ist, möglich sein.

In weiterer Ausgestaltung ist das System dazu ausgebildet, mittels Umschalten des ersten Umschalters und der Kommunikationsverbindung ein nahezu zeitlich synchrones Anzeigen des ersten Datensignals bei Ausfall oder Störung der ersten Zentraleinheit durch die zweite Zentraleinheit zu bewerkstelligen.

Dadurch kann die jeweils mit dem ersten Umschalter verbundene Anzeigeneinheit zeitlich synchronisiert oder nahezu synchronisiert betrieben werden. Der erste Umschalter kann somit als synchronisierter Umschalter angesehen werden. Durch die synchronisierte Anzeige ergibt sich kein Zeitverlust. Es können auch mehr als zwei Zentraleinheiten eine Anzeige synchron ausgeben. Damit lassen sich andere Übernahmeszenarien oder eine höhere Redundanz erzielen.

Vorzugsweise ist bei Wiederverfügbarkeit der ersten Zentraleinheit das System dazu ausgebildet, durch ein Zurückschalten des ersten Umschalters ein Anzeigen des ersten Datensignals auf der ersten Anzeigeneinheit durch die erste Zentraleinheit zu bewerkstelligen.

Ist die Wiederverfügbarkeit der ausgefallenen Zentraleinheit wiederhergestellt, kann die erste Zentraleinheit und die erste Anzeigeneinheit wieder synchron laufen, beispielsweise nach einem Neustart der ausgefallenen ersten Zentraleinheit. Es wird daher wieder ein Zurückschalten auf regulären Betrieb durch das System bewerkstelligt.

**In** weiterer Ausgestaltung ist die Kommunikationsverbindung als ein Netzwerk zwischen der ersten Zentraleinheit und der zweiten Zentraleinheit ausgebildet. Dies kann eine drahtlose oder drahtgebundene Datenverbindung sein. Die Zentraleinheiten sind über das Netzwerk verbunden, so dass Daten u.a. zur Synchronisation übertragen werden können.

**In** weiterer Ausbildung ist die Kommunikationsverbindung als ein Speicher ausgebildet, welcher eine Kommunikationsverbindung zu der ersten Zentraleinheit als auch der zweiten Zentraleinheit aufweist, und wobei die Daten zur Generierung des ersten Datensignals im Speicher gespeichert werden und die zweite Zentraleinheit dazu ausgebildet ist, das erste Datensignal anhand der im Speicher gespeicherten Daten zu generieren. Die Daten zur Generierung der Anzeigen(inhalte) befinden sich daher in dem Speicher, der von den beiden Zentraleinheiten zum Abgreifen der Daten verfügbar ist, oder die Daten zwischen diesen repliziert.

Ferner können zur Sicherheit das Netzwerk als auch der Speicher vorhanden sein, so dass die Daten in beiden Zentraleinheiten gesichert zur Verfügung stehen.

**In** weiterer Ausgestaltung ist die Kommunikationsverbindung als jeweils separate Verbindung von der ersten Zentraleinheit und der zweiten Zentraleinheit zu dem das erste Datensignal bereitstellende Bauteil ausgebildet, so dass die erste Zentraleinheit und die zweite Zentraleinheit jeweils die gleichen Daten aufweisen. Vorzugsweise ist das Bauteil eine Kamera. D. h. diese Kamera wird parallel an mehrere Zentraleinheiten angeschlossen. Dadurch sind alle Daten in den Zentraleinheiten vorhanden. Diese werden aber vorzugsweise nur dort ausgewertet, wo auch ein aktiver Betrieb damit erfolgt.

**In** weiterer Ausgestaltung ist sowohl die erste Zentraleinheit als auch die zweite Zentraleinheit mit einem Bildsensor verbunden, wobei zumindest das erste Datensignal eine Bildanzeige ist. Dieser Bildsensor kann beispielsweise eine Kamera sein, welcher ein Umfeldbild zur Anzeige auf der Anzeigeneinheit aufnimmt bzw. Daten daraus extrahiert und diese zur Anzeige bringt.

**In** weiterer Ausbildung ist eine Überwachungseinheit in der ersten Zentraleinheit vorgesehen, zur Überwachung der ersten Zentraleinheit, so dass ein Ausfall oder eine Störung der ersten Zentraleinheit ermittelbar ist. Die Überwachungseinheit kann beispielsweise als Softwaremodul ausgebildet sein.

Alternativ oder zusätzlich kann eine Überwachungseinheit in dem ersten Umschalter vorgesehen sein, zur Überwachung der ersten Anzeigeneinheit, so dass ein Ausfall oder eine Störung der ersten Zentraleinheit ermittelbar ist.

Ferner kann alternativ oder zusätzlich durch die Überwachungseinheit eine Überwachung bestimmter Anzeigenbereiche in der ersten Zentraleinheit, für das nächste auszugebende erste Datensignal vorgesehen sein.

Auch kann durch die Überwachungseinheit die Überwachung von Prüfsummen im nicht-sichtbaren Bereich der ersten Anzeigeneinheit vorgesehen sein, wobei die Überwachung ebenfalls anhand einer Überwachungseinheit bewerkstelligt werden kann.

**In** weiterer Ausgestaltung ist eine Überwachungseinheit in dem ersten Umschalter vorgesehen, zur Überwachung der ersten Anzeigeneinheit, so dass ein Ausfall oder eine Störung der ersten Zentraleinheit ermittelbar ist.

Dadurch kann eine einfache und schnelle sowie sichere Überwachung zur Feststellung eines Ausfalls oder einer Störung der ersten Zentraleinheit bewerkstelligt werden.

Ferner ist die zweite Zentraleinheit vorzugsweise dazu ausgebildet, das erste Datensignal mit verminderter Qualität zu generieren. Dies bedeutet, dass beispielsweise das erste Kamerabild auch in der zweiten Zentraleinheit immer verarbeitet wird, aber mit geringerer Auflösung, die nur dann erhöht wird, wenn die erste Zentraleinheit ausfällt, d. h. nur bei Benötigung erhöht wird.

Dadurch kann eine Reduktion der Rechenleistung und eine schnellere Übernahme erzielt werden.

Zur Reduktion der Rechenleistung und schnelleren Übernahme kann das System ebenfalls dazu ausgebildet sein, die Qualität anderweitiger Datensignale/rechenintensiver Operationen, die nicht sicherheitsrelevant sind, zu reduzieren, und die Leistung zur Generierung des ersten Datensignals zur Verfügung zu stellen. Beispielsweise können dies Datensignale sein, welche für die Unterhaltung (Mediaentertainmentsystem) benötigt werden.

**In** weiterer Ausgestaltung sind mehrere Zentraleinheiten mit korrespondierenden mehreren Anzeigeneinheiten vorgesehen, wobei die mehreren Zentraleinheiten jeweils über Umschalter mit den korrespondierenden Anzeigeneinheiten verbunden sind.

Damit lassen sich andere Übernahmeszenarien oder eine höhere Redundanz erzielen. Die Verteilung der Funktionen auf Geräte kann auf verschiedene Arten erfolgen. Z. B. könnten die Umschalter in den Anzeigeneinheiten integriert sein, oder in einer zentralen Schalteinheit.

Ferner wird die Aufgabe gelöst durch ein Fahrzeug mit einem wie oben beschriebenen System.

Weitere Merkmale, Eigenschaften und Vorteile der vorliegenden Erfindung ergeben sich aus der nachfolgenden Beschreibung unter Bezugnahme auf die beiliegenden Figuren. Darin zeigen schematisch:
FIG 1: ein erfindungsgemäßes System schematisch in einer ersten Ausgestaltung,
FIG 2: ein erfindungsgemäßes System schematisch in einer zweiten Ausgestaltung.

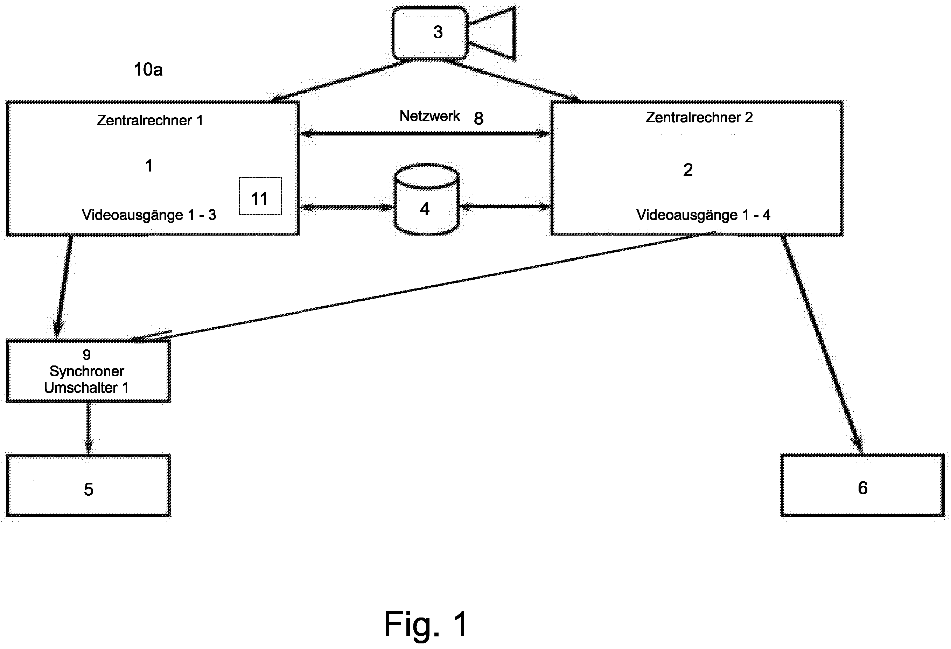

FIG 1 zeigt ein erfindungsgemäßes System 10a in einer ersten Ausgestaltung. Dieses weist zwei Zentraleinheiten, eine erste Zentraleinheit 1 und eine zweite Zentraleinheit 2 auf. Ferner weist das System 10a noch ein datenerzeugendes Bauteil, hier eine Kamera 3 auf. Die Kamera 3 ist zur Datenübertragung mit beiden Zentraleinheiten 1,2 verbunden.

Anhand der gesendeten Daten an die erste Zentraleinheit 1 und die zweite Zentraleinheit 2 wird nun ein erstes Datensignal zur Anzeige auf einer ersten Anzeigeneinheit 5 durch die erste Zentraleinheit 1 und ein zweites Datensignal zur Anzeige auf einer zweiten Anzeigeneinheit 6 durch die zweite Zentraleinheit 2 generiert.

Dabei kann die Kamera 3 die Daten jeweils synchron an die beiden Zentraleinheiten 1,2 übertragen, so dass in beiden Zentraleinheiten 1,2 die jeweils gleichen Daten vorliegen, oder es können jeweils unterschiedliche Daten an die Zentraleinheiten 1,2 gesendet werden. Werden unterschiedliche Daten gesendet, so ist eine andere oder weitere Kommunikationsverbindung zwischen den Zentraleinheiten 1,2 notwendig.

Eine solche kann beispielsweise ein Speicher 4 sein. Von diesem Speicher 4 ist eine Kommunikationsverbindung zu der ersten Zentraleinheit 1 als auch der zweiten Zentraleinheit 2 vorhanden. Dabei werden zumindest die Daten zur Generierung des ersten Datensignals im Speicher 4 gespeichert. Ferner ist die zweite Zentraleinheit 2 dazu ausgebildet, das erste Datensignal anhand der im Speicher 4 gespeicherten Daten zu generieren. Die Daten zur Generierung der Anzeigen(inhalte) befinden sich in dem Speicher 4, der von den beiden Zentraleinheiten 1,2 zum Abgreifen der Daten verfügbar ist, oder die Daten zwischen diesen repliziert.

Alternativ oder zusätzlich kann auch ein Netzwerk 8 zwischen den beiden Zentraleinheiten 1,2 ausgebildet sein, so dass die Daten im Bedarfsfall oder generell ausgetauscht werden.

Ferner weist das System 10a einen ersten Umschalter 9 auf. Der erste Umschalter 9 ist mit der ersten Zentraleinheit 1 als auch der zweiten Zentraleinheit 2 verbunden. Ferner ist der erste Umschalter 9 mit der ersten Anzeigeneinheit 5 verbunden. Im normalen regulären Betrieb generiert die erste Zentraleinheit 1 ein erstes Datensignal, welches auf der ersten Anzeigeneinheit 5 angezeigt wird. Ferner generiert die zweite Zentraleinheit 2 ein zweites Datensignal, welches auf der zweiten Anzeigeneinheit 6 angezeigt wird.

Weist die erste Zentraleinheit 1 ein Problem/Störung/Ausfall auf, so kann durch den ersten Umschalter 9 von der ersten Zentraleinheit 1 zu der zweiten Zentraleinheit 2 umgeschaltet werden.

Dies bedeutet, dass die erste Anzeigeneinheit 5, die mit einem ersten Umschalter 9 verbunden ist, durch die dadurch verbundenen Zentraleinheiten 1,2 zeitlich synchronisiert oder nahezu synchronisiert betrieben werden kann. Allerdings generiert nur jeweils die erste Zentraleinheit 1 im Normalbetrieb einen aktiven Inhalt für die erste Anzeigeneinheit 5. Dadurch wird eine Redundanz erreicht, ohne dass der doppelte Rechenaufwand vorliegt.

Durch den Umschalter 9 und die Kommunikationsverbindung, d.h. das Netzwerk 8, oder den Speicher 4 oder den von der Kamera 3 übermittelten gleichen Daten ist die zweite Zentraleinheit 2 in der Lage, dass von der üblicherweise ersten Zentraleinheit 1 generierten ersten Datensignal bei einer Störung selbst zu generieren und auf der ersten Anzeigeneinheit 5 darzustellen.

Dadurch wird ein im Wesentlicher synchronisierter Betrieb erzielt, durch welche eine für den Anwender nicht oder fast nicht wahrnehmbare Umschaltung ermöglicht wird; in dem ein Umschalten auf die zweite Zentraleinheit 2 möglich ist.

Durch die Synchronisation ist eine Umschaltung in sehr kurzer Zeit möglich, welche normalerweise nicht die Dauer eines "Videoframes" überschreitet. Die Umschaltung erfolgt typischerweise in ca. 20 ms.

Zur Erkennung eines Problems/Störung/Ausfalls in der ersten Zentraleinheit 1 ist eine Überwachungseinheit 11 vorgesehen.

Diese Überwachung 11 kann als Softwaremodul ausgebildet sein und in der ersten Zentraleinheit 1 integriert sein, zur Überwachung der ersten Zentraleinheit 1, so dass ein Ausfall oder eine Störung der ersten Zentraleinheit 1 einfach ermittelbar ist. Alternativ oder zusätzlich kann eine solche Überwachungseinheit 11 in dem ersten Umschalter 9 vorgesehen sein, zur Überwachung der ersten Anzeigeneinheit 5, so dass ein Ausfall oder eine Störung der ersten Zentraleinheit 1 ermittelbar ist.

Auch kann eine Überwachungseinheit 11 zur Überwachung bestimmter Anzeigenbereiche in der ersten Zentraleinheit 5, für das nächste auszugebende Datensignal vorgesehen sein.

Auch kann die Überwachung anhand von vorgegebenen Prüfsummen, welche im nicht-sichtbaren Bereich der ersten Anzeigeneinheit 5 angezeigt werden, durch die Überwachungseinheit 11 bewerkstelligt werden.

Ferner kann die Überwachungseinheit 11 dazu ausgebildet sein, mehrere dieser Optionen zu kombinieren.

Kann das erste Datensignal nicht durch die zweite Zentraleinheit 2 synchron gebildet werden, oder nicht gleich durch den Umschalter 9 umgeschaltet werden, so kann eine Überbrückung bewerkstelligt werden.

Dazu kann beispielsweise der erste Umschalter 9 ein vorheriges/älteres erstes Datensignal bei einem Ausfall der ersten Zentraleinheit 1 speichern, bis eine Umschaltung auf die zweite Zentraleinheit 2 bewerkstelligbar ist und die zweite Zentraleinheit 2 das nachfolgende erste Datensignal generiert. Das heißt, es wird ein Zwischenspeichern eines beispielsweise Bildes im ersten Umschalter 9 bewerkstelligt, das ausgegeben wird, bis die zweite Zentraleinheit 2 verfügbar ist. Dadurch ist eine sehr kurzzeitige Überbrückung, bis beispielsweise die zweite Zentraleinheit 2 bereitsteht, möglich.

Auch kann zur Überbrückung nur ein Teilbild/Teildatensignal im ersten Umschalter 9 zwischengespeichert werden, z. B. ein Viertel.

Dadurch können hierbei beispielsweise die ersten Datensignale mit höherer Rate erzeugt werden, so dass das nächste Datensignal bereits vor dem Anzeigen durch die zweite Zentraleinheit 2 erzeugt wird.

Ferner kann zur Überbrückung im Fehlerfall/Ausfall das letzte Datensignal ausgegeben werden. Dies ist beispielsweise der Fall, wenn es aufgrund eines Neustarts der ausgefallenen ersten Zentraleinheit 1 zu einer Verzögerung kommt und die zweite Zentraleinheit 2 das erste Datensignal zur Anzeige auf der betriebsfähigen Anzeigeneinheit 5 noch nicht generiert hat. Auch die kurzzeitige Ausgabe eines schwarzen Bildes durch den ersten Umschalter 9 bis die zweite Zentraleinheit 2 mit dem ersten Datensignal verfügbar ist, ist möglich, da dies für den Anwender kaum sichtbar ist. Ferner kann auch die kurzzeitige Ausgabe eines hellen Bildes durch den ersten Umschalter 9, bis die zweite Zentraleinheit 2 mit dem ersten Datensignal verfügbar ist, möglich sein.

Zur Erzielung einer Reduktion der Rechenleistung und einer schnelleren Übernahme kann die zweite Zentraleinheit 2 dazu ausgebildet sein, das erste Datensignal mit verminderter Qualität zu generieren. Dies bedeutet, dass das erste Kamerabild auch in der zweiten Zentraleinheit 2 immer verarbeitet wird, aber mit geringerer Auflösung, die nur dann erhöht wird, wenn die erste Zentraleinheit 1 ausfällt, d.h. nur bei aktueller Benötigung erhöht wird.

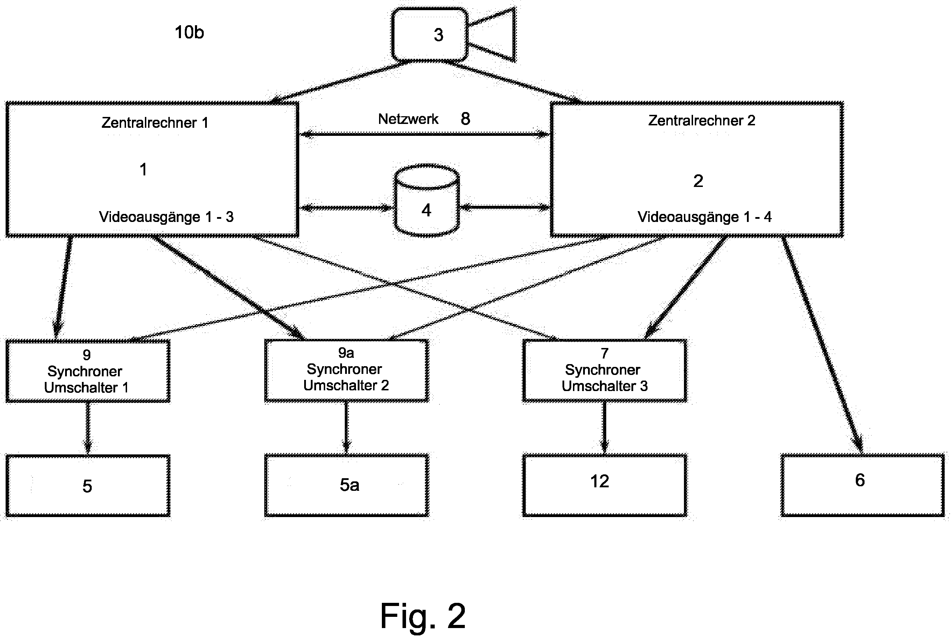

FIG 2 zeigt das erfindungsgemäße System 10b schematisch in einer zweiten Ausgestaltung.

Hierbei ist die Kamera 3 vorhanden. Ferner weist das System 10b die erste Zentraleinheit 1 und die zweite Zentraleinheit 2 auf.

Die erste Zentraleinheit 1 generiert zwei erste, unterschiedliche Datensignale, welche auf einer Anzeigeneinheit 5 und 5a dargestellt werden.

Die zweite Zentraleinheit generiert zwei zweite, unterschiedliche Datensignale, welche auf einer Anzeigeneinheit 12 und der Anzeigeneinheit 6 dargestellt werden.

Durch die Kommunikationsverbindung, d.h. das Netzwerk 8, oder den Speicher 4 oder den von der Kamera 3 übermittelten gleichen Daten ist die zweite Zentraleinheit 2 in der Lage, die von der üblicherweise ersten Zentraleinheit 1 generierten zwei ersten Datensignale selbst zu generieren. Ferner ist die erste Zentraleinheit 1 in der Lage, das eine von der üblicherweise zweiten Zentraleinheit 2 generierten zweiten Datensignal selbst zu generieren.

Ferner sind mehrere erste Umschalter 9, 9a vorgesehen. Mittels diesen kann bei Ausfall der ersten Zentraleinheit 1 die zweite Zentraleinheit 2 die beiden ersten Datensignale generieren und auf der Anzeigeneinheit 5 und 5a darstellen.

Ferner ist ein zweiter Umschalter 7 vorgesehen. Dieser funktioniert analog zu den Umschaltern 9,9a. Mittels diesen kann bei Ausfall der zweiten Zentraleinheit 2 die erste Zentraleinheit 1 das zweite Datensignal generieren und auf der Anzeigeneinheit 12 darstellen.

In dem System 10b wird beispielhaft neben drei sicheren Anzeigeneinheiten 5, 5a, 12 noch die weitere Anzeigeneinheit 6 betrieben, welche als eine nicht sichere Anzeigeneinheit 6 ohne Umschalter ausgebildet ist.

Dies bedeutet, dass die Anzeigeneinheiten 5,5a und 12 sicher und hochverfügbar betrieben werden können.

Dabei weist die erste Zentraleinheit 1 drei Anschlüsse auf, wovon einer unbenutzt ist und für den zweiten Umschalter 7 benutzt werden kann und die zweite Zentraleinheit 2 vier Anschlüsse auf, wovon zwei unbenutzt sind, und welche für die Umschalter 9,9a verwendet werden können.

Die jeweils mit einem Umschalter 9, 9a,7 verbundenen Anzeigeneinheiten 5, 5a,12 können durch die Zentraleinheiten 1,2 zeitlich synchronisiert oder nahezu synchronisiert betrieben werden.

Dadurch ist ein sicheres und hochverfügbares Anzeigen, insbesondere in Fahrzeugen, durch eine schnelle und synchronisierte Umschaltung zwischen mehreren Quellen möglich.

Es können auch mehr als zwei Zentraleinheiten 1,2 mit einer Anzeigeneinheit 5,5a 12 zur synchronen Ausgabe verbunden sein. Damit lassen sich andere Übernahmeszenarien oder eine höhere Redundanz erzielen. Die Verteilung der Funktionen kann auf verschiedene Arten erfolgen. Z. B. könnten die Umschalter 9, 9a, 7 in den Anzeigeneinheiten 5, 5a 12 integriert sein, oder in einer zentralen Schalteinheit.

### Bezugszeichenliste

1 erste Zentraleinheit
2 zweite Zentraleinheit
3 Kamera
4 Speicher
5,5a erste Anzeigeneinheit
6 zweite Anzeigeneinheit(unsicher)
7 zweiter Umschalter
8 Netzwerk
9,9a erster Umschalter
10a, 10b System
11 Überwachungseinheit
12 zweite sichere Anzeigeneinheit

## Patentansprüche

1. System (10a, 10b) zur redundanten Anzeige eines Datensignals, das System (10a,10b) aufweisend eine erste Zentraleinheit (1) zum Generieren eines ersten Datensignals, und eine zweite Zentraleinheit (2) zum Generieren eines zweiten Datensignals,
ferner aufweisend eine erste Anzeigeneinheit (5,5a) , wobei die erste Zentraleinheit (1) mit der ersten Anzeigeneinheit (5,5a) zum Anzeigen des ersten Datensignals verbunden ist,
und eine zweite Anzeigeneinheit (6,12), wobei die zweite Zentraleinheit (2) mit der zweiten Anzeigeneinheit (6,12) zum Anzeigen des zweiten Datensignals verbunden ist,
sowie einen ersten Umschalter (9, 9a), wobei die erste Anzeigeneinheit (5,5a) über den ersten Umschalter (9,9a) mit der ersten Zentraleinheit (1) als auch der zweiten Zentraleinheit (2) verbunden ist,
ferner aufweisend eine Kommunikationsverbindung zwischen der ersten Zentraleinheit (1) und der zweiten Zentraleinheit (2) zum Austausch von Daten, und wobei das System (10a, 10b) dazu konfiguriert ist, bei Ausfall oder Störung der ersten Zentraleinheit (1) mittels Umschalten des ersten Umschalters (9,9a) und der Kommunikationsverbindung ein Anzeigen des ersten Datensignals auf der ersten Anzeigeneinheit (5,5a) durch die zweite Zentraleinheit (2) zu bewerkstelligen, **dadurch gekennzeichnet, dass** der erste Umschalter (9,9a) dazu ausgebildet ist, ein vorheriges Datensignal bei einem Ausfall der ersten Zentraleinheit (1) zu speichern, bis eine Umschaltung auf die zweite Zentraleinheit (2) bewerkstelligbar ist.

2. System (10a,10b) nach Anspruch 1, **dadurch gekennzeichnet, dass** das System (10a,10b) dazu ausgebildet ist, mittels Umschalten des ersten Umschalters (9,9a) und der Kommunikationsverbindung ein nahezu zeitlich synchrones Anzeigen des ersten Datensignals bei Ausfall oder Störung der ersten Zentraleinheit (1) durch die zweite Zentraleinheit (2) zu bewerkstelligen.

3. System (10a,10b) nach einem der vorhergehenden Ansprüche, **dadurch gekennzeichnet, dass** bei Wiederverfügbarkeit der ersten Zentraleinheit (1) das System (10a,10b) dazu ausgebildet ist, durch ein Zurückschalten des ersten Umschalters (9,9a) ein Anzeigen des ersten Datensignals auf der ersten Anzeigeneinheit (5,5a) durch die erste Zentraleinheit (1) zu bewerkstelligen.

4. System (10a,10b) nach einem der vorhergehenden Ansprüche, **dadurch gekennzeichnet, dass** die Kommunikationsverbindung als ein Netzwerk (8) zwischen der ersten Zentraleinheit (1) und der zweiten Zentraleinheit (2) ausgebildet ist.

5. System (10a,10b) nach einem der vorhergehenden Ansprüche, **dadurch gekennzeichnet, dass** die Kommunikationsverbindung als ein Speicher (4) ausgebildet ist, welcher eine Kommunikationsverbindung zu der ersten Zentraleinheit (1) als auch der zweiten Zentraleinheit (2) aufweist, und wobei die Daten zur Generierung des ersten Datensignals im Speicher (4) gespeichert werden und die zweite Zentraleinheit (2) dazu ausgebildet ist, das erste Datensignal anhand der im Speicher (4) gespeicherten Daten zu generieren.

6. System (10a,10b) nach einem der vorhergehenden Ansprüche, **dadurch gekennzeichnet, dass** die Kommunikationsverbindung als jeweils separate Verbindung von der ersten Zentraleinheit (1) und der zweiten Zentraleinheit (2) zu dem das erste Datensignal bereitstellende Bauteil ausgebildet ist, so dass die erste Zentraleinheit (1) und die zweite Zentraleinheit (2) jeweils die gleichen Daten aufweisen.

7. System (10a,10b) nach einem der vorhergehenden Ansprüche, **dadurch gekennzeichnet, dass** sowohl die erste Zentraleinheit (1) als auch die zweite Zentraleinheit (2) mit einem Bildsensor verbunden ist und wobei zumindest das erste Datensignal eine Bildanzeige ist.

8. System (10a,10b) nach einem der vorhergehenden Ansprüche, **dadurch gekennzeichnet, dass** eine Überwachungseinheit (11) in der ersten Zentraleinheit (1) vorgesehen ist, zur Überwachung der ersten Zentraleinheit (1), so dass ein Ausfall oder eine Störung der ersten Zentraleinheit (1) ermittelbar ist.

9. System (10a,10b) nach einem der vorhergehenden Ansprüche, **dadurch gekennzeichnet, dass** eine Überwachungseinheit (11) in dem ersten Umschalter (9,9a) vorgesehen ist, zur Überwachung der ersten Anzeigeneinheit (5,5a), so dass ein Ausfall oder eine Störung der ersten Zentraleinheit (1) ermittelbar ist.

10. System (10a,10b) nach einem der vorhergehenden Ansprüche, **dadurch gekennzeichnet, dass** die zweite Zentraleinheit (2) dazu ausgebildet ist, das erste Datensignal mit verminderter Qualität zu generieren.

11. System (10a,10b) nach einem der vorhergehenden Ansprüche, **dadurch gekennzeichnet, dass** mehrere Zentraleinheiten mit korrespondierenden mehreren Anzeigeneinheiten vorgesehen sind, wobei die mehreren Zentraleinheiten jeweils über Umschalter mit den korrespondierenden Anzeigeneinheiten verbunden sind.

12. Fahrzeug mit einem System (10a,10b) nach einem der vorhergehenden Ansprüche.

## Claims

1. A system (10a, 10b) for redundant display of a data signal, the system (10a, 10b) having a first central unit (1) for generating a first data signal and a second central unit (2) for generating a second data signal,
furthermore having a first display unit (5, 5a), wherein the first central unit (1) is connected to the first display unit (5, 5a) to display the first data signal,
and a second display unit (6, 12), wherein the second central unit (2) is connected to the second display unit (6, 12) for displaying the second data signal,
and a first changeover switch (9, 9a), wherein the first display unit (5, 5a) is connected to the first central unit (1) and to the second central unit (2) via the first changeover switch (9, 9a),
furthermore having a communication connection between the first central unit (1) and the second central unit (2) for exchanging data, and wherein the system (10a, 10b) is configured so that, in the event of failure or interference of the first central unit (1), the second central unit (2) displays the first data signal on the first display unit (5, 5a) by means of switching over the first changeover switch (9, 9a) and the communication connection, **characterised in that** the first changeover switch (9, 9a) is designed to store a previous data signal in the event of failure of the first central unit (1) until a switchover to the second central unit (2) can be effectuated.

2. The system (10a, 10b) as claimed in claim 1, **characterised in that** the system (10a, 10b) is designed to have the second central unit (2) display the first data signal nearly synchronously in the event of failure or interference of the first central unit (1) by means of switching over the first changeover switch (9, 9a) and the communication connection.

3. The system (10a, 10b) as claimed in any one of the preceding claims, **characterised in that**, when the first central unit (1) is available again, the system (10a, 10b) is designed to have the first data signal displayed on the first display unit (5, 5a) by the first central unit (1) by switching back the first changeover switch (9, 9a).

4. The system (10a, 10b) as claimed in any one of the preceding claims, **characterised in that** the communication connection is designed as a network (8) between the first central unit (1) and the second central unit (2).

5. The system (10a, 10b) as claimed in any one of the preceding claims, **characterised in that** the communication connection is designed as a memory (4) which has a communication connection to the first central unit (1) and to the second central unit (2), and wherein the data for generating the first data signal are stored in the memory (4) and the second central unit (2) is designed to generate the first data signal on the basis of the data stored in the memory (4).

6. The system (10a, 10b) as claimed in any one of the preceding claims, **characterised in that** the communication connection is designed as a separate connection in each case from the first central unit (1) and the second central unit (2) to the component providing the first data signal, so that the first central unit (1) and the second central unit (2) each have the same data.

7. The system (10a, 10b) as claimed in any one of the preceding claims, **characterised in that** both the first central unit (1) and the second central unit (2) are connected to an image sensor and wherein at least the first data signal is an image display.

8. The system (10a, 10b) as claimed in any one of the preceding claims, **characterised in that** a monitoring unit (11) is provided in the first central unit (1) for monitoring the first central unit (1) so that a failure or interference of the first central unit (1) is determinable.

9. The system (10a, 10b) as claimed in any one of the preceding claims, **characterised in that** a monitoring unit (11) is provided in the first changeover switch (9, 9a) for monitoring the first display unit (5, 5a) so that a failure or interference of the first central unit (1) is determinable.

10. The system (10a, 10b) as claimed in any one of the preceding claims, **characterised in that** the second central unit (2) is designed to generate the first data signal at reduced quality.

11. The system (10a, 10b) as claimed in any one of the preceding claims, **characterised in that** multiple central units correspondingly having multiple display units are provided, wherein the multiple central units are each connected to the corresponding display units via changeover switches.

12. A vehicle having a system (10a, 10b) as claimed in any one of the preceding claims.

## Revendications

1. Système (10a, 10b) d'affichage redondant d'un signal de données, le système (10a, 10b) présentant une première unité centrale (1) pour générer un premier signal de données, et une seconde unité centrale (2) pour générer un second signal de données,
présentant en outre une première unité d'affichage (5, 5a), dans lequel la première unité centrale (1) est reliée à la première unité d'affichage (5, 5a) pour afficher le premier signal de données,
et une seconde unité d'affichage (6, 12), dans lequel la seconde unité centrale (2) est reliée à la seconde unité d'affichage (6, 12) pour afficher le second signal de données,
ainsi qu'un premier commutateur (9, 9a), dans lequel la première unité d'affichage (5, 5a) est reliée, via le premier commutateur (9, 9a), à la fois à la première unité centrale (1) et à la seconde unité centrale (2),
présentant en outre une connexion de communication entre la première unité centrale (1) et la seconde unité centrale (2) pour l'échange de données, et dans lequel le système (10a, 10b) est configuré de manière à ce qu'en cas de défaillance ou de perturbation de la première unité centrale (1), un affichage du premier signal de données sur la première unité d'affichage (5, 5a) peut être réalisé par la seconde unité centrale (2) au moyen du basculement du premier commutateur (9, 9a) et de la connexion de communication, **caractérisé en ce que** le premier commutateur (9, 9a) est conçu pour stocker un signal de données précédent en cas de défaillance de la première unité centrale (1), jusqu'à ce qu'un basculement vers la seconde unité centrale (2) puisse être effectué.

2. Système (10a, 10b) selon la revendication 1, **caractérisé en ce que** le système (10a, 10b) est conçu de manière à permettre, au moyen du basculement du premier commutateur (9, 9a) et de la connexion de communication, un affichage quasi-synchronisé du premier signal de données par la seconde unité centrale (2) en cas de défaillance ou de perturbation de la première unité centrale (1).

3. Système (10a, 10b) selon l'une quelconque des revendications précédentes, **caractérisé en ce que**, lors de la remise à disposition de la première unité centrale (1), le système (10a, 10b) est conçu de manière à permettre, par un retour du premier commutateur (9, 9a), un affichage du premier signal de données sur la première unité d'affichage (5, 5a) par la première unité centrale (1).

4. Système (10a, 10b) selon l'une quelconque des revendications précédentes, **caractérisé en ce que** la connexion de communication est réalisée sous la forme d'un réseau (8) entre la première unité centrale (1) et la seconde unité centrale (2).

5. Système (10a, 10b) selon l'une quelconque des revendications précédentes, **caractérisé en ce que** la connexion de communication est réalisée sous la forme d'une mémoire (4), laquelle présente une connexion de communication à la fois avec la première unité centrale (1) et avec la seconde unité centrale (2), et dans lequel les données destinées à la génération du premier signal de données sont stockées dans la mémoire (4) et la seconde unité centrale (2) est conçue de manière à générer le premier signal de données sur la base des données stockées dans la mémoire (4).

6. Système (10a, 10b) selon l'une quelconque des revendications précédentes, **caractérisé en ce que** la connexion de communication est réalisée sous forme de connexions séparées respectivement de la première unité centrale (1) et de la seconde unité centrale (2) vers le composant fournissant le premier signal de données, de sorte que la première unité centrale (1) et la seconde unité centrale (2) possèdent chacune les mêmes données.

7. Système (10a, 10b) selon l'une quelconque des revendications précédentes, **caractérisé en ce que** la première unité centrale (1) ainsi que la seconde unité centrale (2) sont toutes deux reliées à un capteur d'image, et dans lequel au moins le premier signal de données est un affichage d'image.

8. Système (10a, 10b) selon l'une quelconque des revendications précédentes, **caractérisé en ce qu'**une unité de surveillance (11) est prévue dans la première unité centrale (1) pour surveiller la première unité centrale (1), de sorte qu'une défaillance ou une perturbation de la première unité centrale (1) puisse être détectée.

9. Système (10a, 10b) selon l'une quelconque des revendications précédentes, **caractérisé en ce qu'**une unité de surveillance (11) est prévue dans le premier commutateur (9, 9a) pour surveiller la première unité d'affichage (5, 5a), de sorte qu'une défaillance ou une perturbation de la première unité centrale (1) puisse être détectée.

10. Système (10a, 10b) selon l'une quelconque des revendications précédentes, **caractérisé en ce que** la seconde unité centrale (2) est conçue de manière à générer le premier signal de données avec une qualité réduite.

11. Système (10a, 10b) selon l'une quelconque des revendications précédentes, **caractérisé en ce que** plusieurs unités centrales sont prévues avec plusieurs unités d'affichage correspondantes, dans lequel les plusieurs unités centrales sont respectivement reliées aux unités d'affichage correspondantes au moyen de commutateurs.

12. Véhicule comportant un système (10a, 10b) selon l'une quelconque des revendications précédentes.
